# EUROPÄISCHE PATENTSCHRIFT

(11) **EP 3 326 441 B1**
(45) Veröffentlichungstag und Bekanntmachung des Hinweises auf die Patenterteilung: **06.11.2019**
(21) Anmeldenummer: 17401114.8
(22) Anmeldetag: 16.11.2017
(51) Int. Cl.: A01C 15/00, A01C 7/08

(54) **LANDWIRTSCHAFTLICHE VERTEILMASCHINE MIT RÜHREINRICHTUNG**
AGRICULTURAL SPREADER WITH STIRRING DEVICE
MACHINE D'ÉPANDAGE AGRICOLE DOTÉE D'UN DISPOSITIF D'AGITATION

(30) Priorität: 23.11.2016 DE 102016122552
(43) Veröffentlichungstag der Anmeldung: 30.05.2018
(73) Patentinhaber: Amazonen-Werke H. Dreyer GmbH & Co. KG, 49205 Hasbergen (DE)
(72) Erfinder: Stier, Roy, 26121 Oldenburg (DE)

(56) Entgegenhaltungen:
- EP-A1- 1 704 765
- DE-U- 1 950 873
- GB-A- 2 029 185
- US-A1- 2005 284 349

## Beschreibung

Die Erfindung betrifft eine landwirtschaftliche Verteilmaschine gemäß dem Oberbegriff des Patentanspruches 1.

Eine derartige Sämaschine weist typischerweise eine Rühreinrichtung auf, um ein Verklumpen von Saatgut, insbesondere im Auslaufbereich des Vorratsbehälters, zu vermeiden. Eine solche Rühreinrichtung ist in DE 1 950 873 U1 beschrieben. Die Rühreinrichtung ist als angetriebene Rührwelle ausgeführt und weist eine Vielzahl von Rührelementen auf, welche entlang der Rührwelle angeordnet sind. Diese sind lösbar an der Rührwelle befestigt. Dadurch können sie für verschiedene Saatgüter entsprechend des Bedarfs an der Rührwelle angebaut oder nicht angebaut sein. Die beschriebenen Rührelemente bestehen aus Federdraht und weisen mehrere gebogene und/oder abgeknickte Teile auf.

Die US 2005/0284349 beschreibt eine weitere Rühreinrichtung mit zwei verschiedenen Arten von Rührelementen.

Die EP 1 704 765 A1 beschreibt eine Rühreinrichtung, deren Rührelemente mittels eines Verbindungselementes an der Rührwelle angeordnet sind.

Die derart ausgeführten Rührelemente ragen von der Rührwelle ausgehend finger- oder maschenartig in den Vorratsbehälter und rührend dabei bei Rotation der Rührwelle durch das im Vorratsbehälter bevorratete Saatgut. Nachteilig dabei ist, dass die finger- oder maschenartig in den Vorratsbehälter ragenden Rührelemente Kanten und/oder Maschen aufweisen, an denen sich Gegenstände verhaken können. Dadurch besteht die Gefahr, dass diese Gegenstände in die Rührwelle eingezogen werden.

Es ist denkbar, dass ein Bediener der Sämaschine Arbeiten in der Nähe der rotierenden Rühreinrichtung durchführen muss. Beispielsweise aufgrund Unachtsamkeit können seine Hände, Finger und/oder Teile seiner Kleidung von den Kanten der Rührelemente erfasst und somit von den Rührelementen eingezogen werden. Dies führt zur Gefahr erheblicher Verletzungen des Bedieners und ist daher unbedingt zu vermeiden.

In analoger Weise können auch Werkzeuge des Bedieners durch dessen Unachtsamkeit mit den Rührelementen in Kontakt kommen und eingezogen werden. Hierdurch entsteht die Gefahr kostspieliger Beschädigungen der Rühreinrichtung. Die DE 10 2016 113 619 beschreibt eine Rühreinrichtung, welche mit scheibenartigen Rührelementen ausgestattet ist. Die scheibenförmigen Rührelemente sind mittels Schraub- und/oder Steckverbindungen mit der Rührwelle verbunden und weisen Formelemente auf, welche beim Durchgang durch das bevorratete Material eine Rührwirkung erzielen. Durch die scheibenartige Ausgestaltung der Rührelemente wird die für einen Bediener gefährliche Einzugswirkung erheblich reduziert. Allerdings ergibt sich der Nachteil, dass bei Feinsämereien, wie beispielsweise Grassamen, die erzielte Rührwirkung nicht ausreichend stark ist, um Verstopfungen und/oder Verklumpungen zuverlässig zu beseitigen. Somit ist ein ausreichend gleichmäßiger Nachfluss der Feinsämereien nicht gewährleistet.

Der Erfindung liegt daher die Aufgabe zugrunde, eine Rühreinrichtung mit zumindest einem Rührelement bereitzustellen, welche ein erheblich reduziertes Verletzungsrisiko für den Bediener aufweist und zugleich auch bei Feinsämereien eine ausreichend zuverlässige Rührwirkung erzielt.

Die Aufgabe der Erfindung wird gelöst durch die Kennzeichnenden Merkmale des Anspruchs 1.

Durch einen modularen Aufbau der Rührelemente der Rühreinrichtung ist es in vorteilhafter Weise möglich, die Rührelemente an die bevorstehende Arbeitsaufgabe anzupassen. Es ist somit möglich, die scheibenförmigen Rührelemente, wie sie in der DE 10 2016 113 619 beschrieben sind, zu nutzen. Diese besitzen keinerlei Maschen und/oder Kanten, in denen sich Gliedmaßen, Teile der Kleidung und/oder Werkzeuge des Bedieners verfangen können. Somit weisen die scheibenförmigen Rührelemente nur eine geringe Einzugswirkung auf, was die Verletzungsgefahr eines Bedieners erheblich reduziert. Eine für Feinsämereien geeignete Rührwirkung wird in einfacher Weise durch das Ergänzen einer zweiten, aggressiveren Rührelementkomponente ermöglicht.

Ein besonderer Vorteil des erfindungsgemäß modular aufgebauten Rührelements ergibt sich dadurch, dass die Rühreinrichtung einer Verteilmaschine mit der zweiten Rührelementkomponente nachgerüstet werden kann. Somit ist es möglich, insbesondere ältere, Verteilmaschinen zum Ausbringen von Feinsämereien umzurüsten.

Es ist erfindungsgemäß, dass sich die mit der Rührwelle rotierende zweite Rührelementkomponente bei Erreichen und/oder Überschreiten eines Drehmomentgrenzwerts durch Auftreffen auf ein Hindernis derart verformt, dass sie sich von der Rührwelle und/oder der ersten Rührelementkomponente löst. Durch diese Maßnahme wird erreicht, dass bei Auftreffen der zweiten Rührelementkomponente auf ein Hindernis, beispielsweise Gliedmaßen, Teile der Kleidung und/oder Werkzeug eines Bedieners, dem die zweite Rührelementkomponente nicht durch Verformung ausweichen kann, weder der Bediener verletzt, noch die Rühreinrichtung beschädigt werden kann.

Es ferner erfindungsgemäß, dass eine durch Erreichen und/oder Überschreiten eines Drehmomentgrenzwerts von der Rührwelle und/oder der ersten Rührelementkomponente gelöste zweite Rührelementkomponente wiederverwendbar ist. Durch eine Wiederverwertbarkeit der zweiten Rührelementkomponente wird die Wirtschaftlichkeit der Verteilmaschine gesteigert. Trotz der für den Bediener erreichten hohen Arbeitssicherheit und die Vermeidung von überlastbedingten Beschädigungen der Rühreinrichtung muss bei Auslösen der beschriebenen Sicherheitsmechanismen kein neues Bauteil beschafft werden, um die Funktionstüchtigkeit der Rühreinrichtung wiederherzustellen.

Es ist von Vorteil, dass die zweite Rührelementkomponente flexibel ausgebildet ist. Durch die flexible Ausgestaltung ist die zweite Rührelementkomponente in besonders einfacher Weise an der Rührwelle und/oder der ersten Rührelementkomponenten befestigbar und wieder abnehmbar.

Es wird ein besonderer Vorteil erreicht, indem die zweite Rührelementkomponente die Rührwelle zumindest teilweise umgreifend ausgebildet und die Rührwelle umklammernd an der Rührwelle befestigt ist. Durch diese Maßnahme lässt ich die zweite Rührelementkomponente in einfacher Weise mithilfe einer Klemmwirkung an der Rührwelle und/oder der ersten Rührelementkomponente befestigen. Durch die Klemmwirkung wird eine aufwändige Steck- und/oder Schraubverbindung vermieden. Dadurch ist der Materialaufwand gering und die Montage und/oder Demontage kann mit besonders geringem Arbeitsaufwand erfolgen. Somit sind Umrüstarbeiten, beispielsweise für verschiedene auszubringende Saatgüter, schnell zu erledigen, wodurch die Wirtschaftlichkeit der Verteilmaschine steigt.

In weiterhin vorteilhafter Weise ist die Befestigung der zweiten Rührelementkomponente mittels Klemmwirkung an der Rührwelle und/oder ersten Rührelementkomponente unanfällig gegen Verschmutzungen. Innerhalb des Vorratsbehälters auftretende Stäube würden hingegen beispielsweise für eine Schraubverbindung notwendige, feine Gewinde verunreinigen und somit eine sichere Befestigung der zweiten Rührelementkomponente behindern.

Es ist vorteilhaft, dass die erste Rührelementkomponente Aussparungen aufweist und die zweite Rührelementkomponente durch Eingriff in die Aussparungen der ersten Rührelementkomponente mit der ersten Rührelementkomponente verbunden ist. Durch diese Maßnahme ist sichergestellt, dass die zweite Rührelementkomponente formschlüssig mit der ersten Rührelementkomponente verbunden ist. Die Rührwelle ist zum Erzielen der Rührwirkung rotierend angetrieben. Die mittels Schraub- und/oder Steckverbindung an der Rührwelle befestigte ersten Rührelementkomponente rotiert mit der Rührwelle. Durch den Eingriff der zweiten Rührelementkomponente in dafür vorgesehene Aussparungen der ersten Rührelementkomponente wird die Rotation der Rührwelle verlustfrei auf die zweite Rührelementkomponente übertragen. Es wird in vorteilhafter Weise verhindert, dass die Rührwelle und/oder erste Rührelementkomponente unabhängig von der zweiten Rührelementkomponente rotiert.

Es wird ein Vorteil dadurch erreicht, dass die zweite Rührelementkomponente durch Formschluss mit der ersten Rührelementkomponente gegen ein Verschieben entlang der Längsachse der Rührwelle gesichert ist. Durch das formschlüssige Anliegen der zweiten Rührelementkomponente an der mit der Rührwelle fest verbundenen ersten Rührelementkomponente ist sichergestellt, dass die zweite Rührelementkomponente nicht durch äußere Einflüsse entlang der Rührwelle verschiebbar ist. Somit befindet sich die zweite Rührelementkomponente stets an der richtigen Position oberhalb des Dosierorgans.

Es ist von Vorteil, dass die zweite Rührelementkomponente die Rührwelle in Rotationsrichtung umgreift und ein offenes Ende aufweist, welches in Rotationsrichtung orientiert ist. Mithilfe des offenen Endes wird ein Umgreifen der Rührwelle und/oder der ersten Rührelementkomponente durch die zweite Rührelementkomponente ermöglicht. In Zusammenwirken mit der flexiblen Ausgestaltung der zweiten Rührelementkomponente wird mithilfe des offenen Endes der zweiten Rührelementkomponente die zur Befestigung an der Rührwelle und/oder der ersten Rührelementkomponente notwendige Klemmwirkung erzielt.

Durch ein offenes Ende der zweiten Rührelementkomponente können sich Kanten bilden, an denen sich Gliedmaßen, Teile der Kleidung und/oder Werkzeug eines Bedieners verfangen können. Aus diesem Grund ist es besonders vorteilhaft, dass die zweite Rührelementkomponente derart ausgeformt ist, dass sie bei einer Rotation mit der Rührwelle keine einziehende Wirkung entfaltet. Somit wird die Verletzungsgefahr für einen Bediener gering gehalten.

Aufgrund der Rotationsbewegung der zweiten Rührelementkomponente mit der Rührwelle und/oder der ersten Rührelementkomponente um die Längsachse der Rührwelle ist zur Reduzierung der einziehenden Wirkung der zweiten Rührelementkomponente eine Krümmung des offenen Endes bevorzugt, welche der Rotationsrichtung entgegen gerichtet ist. Insbesondere ermöglicht diese Maßnahme im Zusammenwirken mit der flexiblen Ausgestaltung der zweiten Rührelementkomponente eine Verformbarkeit der zweiten Rührelementkomponente, sodass diese Gliedmaßen, Teile der Kleidung und/oder Werkzeug eines Bedieners nicht einzieht, sondern unschädlich an ihnen entlangbewegt.

Es ist wichtig, dass die der Befestigung der zweiten Rührelementkomponente an der Rührwelle und/oder ersten Rührelementkomponente dienende Klemmwirkung ausreichend stark für eine Verstopfungen und/oder Verklumpungen lösende Rührwirkung bei Feinsämereien ist, gleichzeitig aber durch Verformung ein Ablösen der zweiten Rührelementkomponente von der Rührwelle und/oder ersten Rührelementkomponente bei Auftreffen auf ein Hindernis zulässt.

Das beschriebene Ablösen wird dadurch unterstützt, dass die zweite Rührelementkomponente die Rührwelle umgreifend sowie flexibel ausgebildet ist und ein offenes Ende aufweist, welches in Rotationsrichtung der Rührwelle orientiert ist. Durch die Rotation der Rührwelle trifft die zweite Rührelementkomponente auf das Hindernis, welches sich in der zweiten Rührelementkomponente, insbesondere in seinem offenen Ende, verfängt. Durch die anhaltende Rotationsbewegung wird das offene Ende gegen das Hindernis gedrückt und das auf die zweite Rührelementkomponente und/oder deren offenes Ende wirkende Drehmoment erhöht. Durch den Druck des offenen Endes der zweiten Rührelementkomponente gegen das Hindernis wird die flexibel ausgebildete, die Rührwelle umgreifende zweite Rührelementkomponente aufgespreizt und/oder aufgebogen, wodurch nach Erreichen und/oder Überschreiten eines Grenzdrehmoments die Klemmwirkung aufgehoben wird. Infolge der aufgehobenen Klemmwirkung löst sich bei weiterer Rotation der Rührwelle die zweite Rührelementkomponente vollständig von der Rührwelle und/oder der ersten Rührelementkomponente. Die abgelöste zweite Rührelementkomponente verbleibt innerhalb des Vorratsbehälters und kann vom Bediener geborgen werden.

Da die Befestigung der flexibel, die Rührwelle umgreifend ausgebildeten zweiten Rührelementkomponente mittels Klemmwirkung erfolgt, lässt sich die abgelöste zweite Rührelementkomponente in einfacher Weise erneut an der Rührwelle und/oder ersten Rührelementkomponente anbringen. Dabei ist sie voll funktionstüchtig.

Es wird ein Vorteil erreicht, indem die zweite Rührelementkomponente aus Kunststoff oder Metall besteht. Beide Werkstoffe lassen sich zur Herstellung der erfindungsgemäßen zweiten Rührelementkomponente in einfacher Weise beliebig formen. Sowohl Kunststoff als auch Metall weisen die notwendige Flexibilität auf, um die beschriebenen Funktionen zu entfalten. Zudem sind Kunststoff und Metall sehr kostengünstige Werkstoffe.

Es ist vorteilhaft, dass die zweite Rührelementkomponente drahtförmig ausgestaltet ist. Durch eine drahtförmige Ausgestaltung wird nur eine geringe Werkstoffmenge benötigt, um die erfindungsgemäße zweite Rührelementkomponente mitsamt ihrer beschriebenen Funktionalität herzustellen. Insbesondere weist eine drahtförmige zweite Rührelementkomponente eine besonders hohe Flexibilität auf.

Durch die geringen Materialanforderungen und die einfache Herstellung ist die zweite Rührelementkomponente ein besonders kostengünstiges Bauteil. Selbst im Falle eines Verlusts oder einer Beschädigung ist es günstig ersetzbar und schnell montierbar.

Es entsteht ein besonderer Vorteil dadurch, dass die Montage der zweiten Rührelementkomponente werkzeuglos erfolgt. Durch eine werkzeuglose Montage oder Demontage kann eine Umrüstung der Verteilmaschine für eine Ausbringung von Feinsämereien sehr komfortabel und schnell erfolgen. Dies steigert in hohem Maße die Wirtschaftlichkeit und die Flexibilität der Verteilmaschine. Zudem ist es einem Bediener möglich, jederzeit, insbesondere auf dem Feld und/oder abseits von Werkstätten, abgelöste zweite Rührelementkomponenten erneut an der Rührwelle und/oder den ersten Rührelementkomponenten anzubringen, ohne passendes Werkzeug bei sich haben oder suchen zu müssen. Dadurch können Stillstandszeiten der Verteilmaschine erheblich reduziert werden.

Weitere Einzelheiten der Erfindung sind der Beispielsbeschreibung und den Zeichnungen zu entnehmen. Die Zeichnungen zeigen
- Fig.1: den Vorratsbehälter einer landwirtschaftlichen Verteilmaschine in seitlichem Querschnitt,
- Fig.2: den Vorratsbehälter einer landwirtschaftlichen Verteilmaschine mit Dosierorganen und Rührwelle in perspektivischer Ansicht von schräg hinten,
- Fig.3: die Rührwelle einer landwirtschaftlichen Verteilmaschine mit Rührelementen,
- Fig.4: die Rührwelle einer landwirtschaftlichen Verteilmaschine mitsamt erster Rührelementkomponente und zweiter Rührelementkomponente in Explosionsdarstellung,
- Fig.5: die Kombination aus erster Rührelementkomponente und zweiter Rührelementkomponente in seitlicher Ansicht und
- Fig.6: auf der Rührwelle erste und zweite Rührelementkomponente in perspektivischer Ansicht.

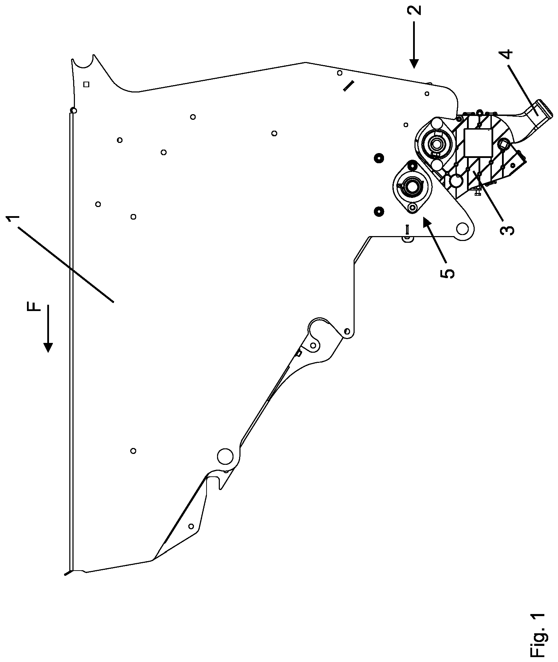

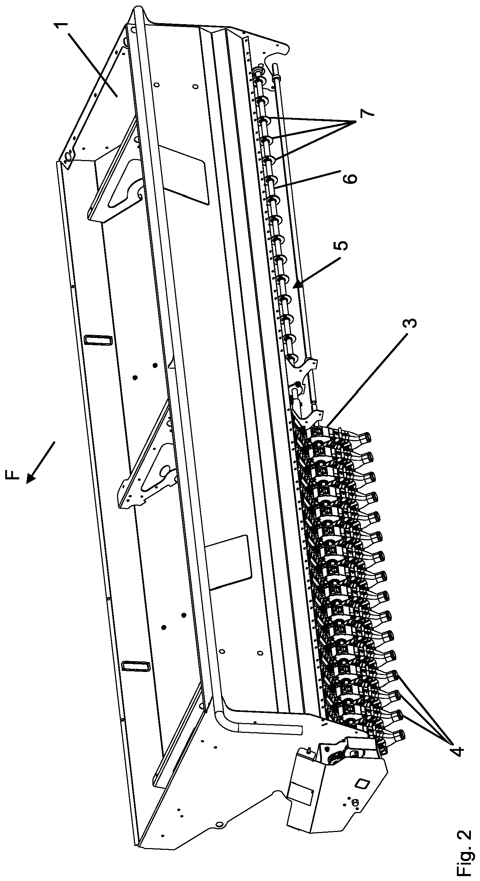

Eine landwirtschaftliche Verteilmaschine, weist einen Vorratsbehälter 1 zur Bevorratung von zu verteilendem Material, vorzugsweise Saatgut und/oder Düngemittel, auf. Ein derartiger Vorratsbehälter 1 ist in den Fig. 1 und 2 gezeigt. Der Vorratsbehälter stützt sich auf einem nicht dargestellten Rahmen der landwirtschaftlichen Verteilmaschine ab, wobei die Verteilmaschine zum Anbau oder Anhängen an eine nicht dargestellte landwirtschaftliche Zugmaschine vorgesehen ist.

Der Vorratsbehälter 1 weist einen Auslaufbereich 2 auf. Unterhalb des Auslaufbereichs 2 ist quer zur Fahrtrichtung F eine Vielzahl von Dosierorganen 3 angeordnet. Die Dosierorgane 3 dienen der Einspeisung des auszubringenden Saatguts in zu Ausbringelementen führende Förderleitungen 4.

Im unteren Bereich des Vorratsbehälters 1 ist oberhalb der Dosierorgane 3 eine Rühreinrichtung 5 angeordnet. Im Beispiel der Fig. 1 bis 6 ist die Rühreinrichtung 5 als drehbar gelagerte Rührwelle 6 ausgeführt. Die Rührwelle 6 ist horizontal quer zur Fahrtrichtung F angeordnet und erstreckt sich über die gesamte Breite des Vorratsbehälters 1.

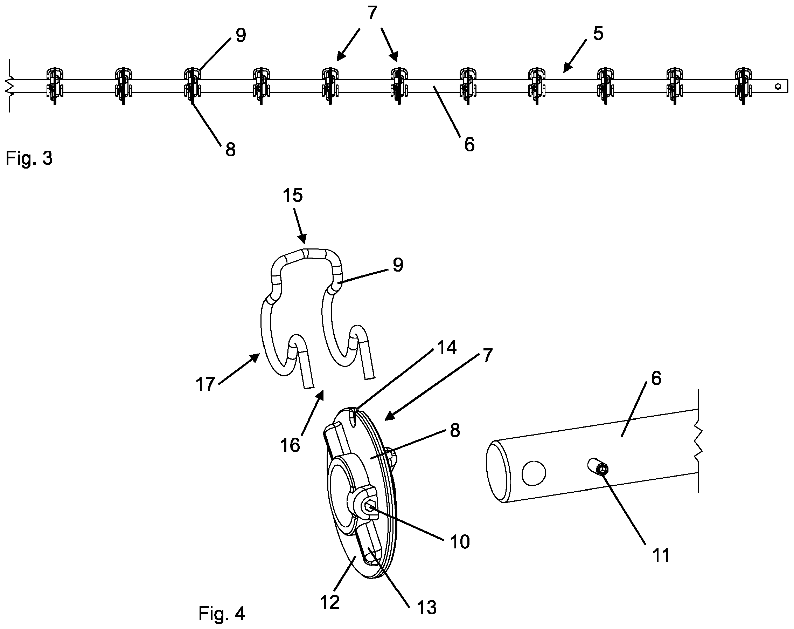

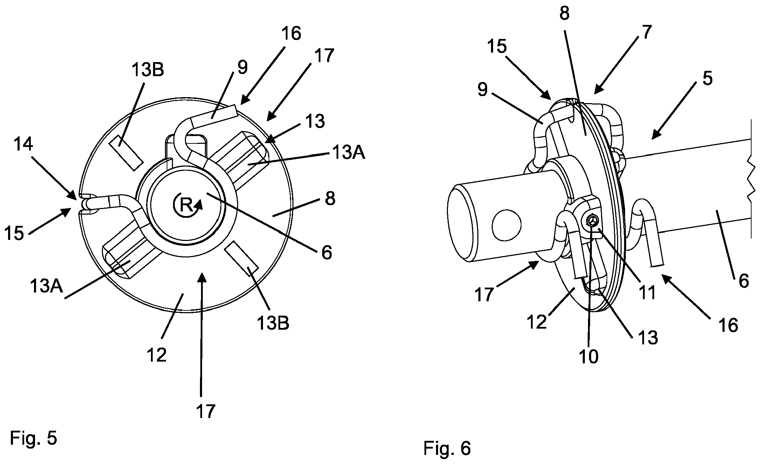

Entlang der Rührwelle 6 sind äquidistant beabstandet zueinander Rührelemente 7 angeordnet und drehfest befestigt, wie es in Fig. 3 gezeigt ist. Die Rührelemente 7 bestehen aus einer ersten Rührelementkomponente 8 und einer zweiten Rührelementkomponente 9, wie in Fig. 4 bis 6 dargestellt. Zur Befestigung an der Rührwelle 6 weist die erste Rührelementkomponente 8 einen Aufnahmebereich 10 zur Aufnahme eines Befestigungselements 11 auf, gezeigt in den Fig. 4 und 6. Geeignete Befestigungselemente 11 sind beispielsweise Schrauben oder Bolzen. Durch derartige Befestigungselemente 11 wird eine zuverlässige und zugleich lösbare Befestigung der ersten Rührelementkomponente 8 an der Rührwelle 6 erreicht.

Durch die lösbare Befestigung der ersten Rührelementkomponente 8 an der Rührwelle 6 kann die erste Rührelementkomponente 8 im Wartungs- und/oder Verschleißfall in einfacher Weise und schnell ausgetauscht werden. Zudem können, entsprechend der bevorstehenden Arbeitsaufgabe, Rührelemente 7 geeigneten Typs und/oder in geeigneter Anzahl an der Rührwelle 6 angeordnet werden.

Mittels Rotation der Rührwelle 6 werden Rührelemente 7 in Rotation um die als Rotationsachse dienende, quer zur Fahrtrichtung F Längsachse der Rührwelle 6 versetzt. Die Rührelemente 7 dienen der Auflockerung des im Vorratsbehälter 1 bevorrateten Saatguts. Dies vermeidet Verklumpungen und/oder Verstopfungen und stellt einen gleichmäßigen Saatgutfluss zu den Dosierorganen 3 sicher.

Die erste Rührelementkomponente 8 ist scheibenartig ausgeführt, wie es die Fig. 4 bis 6 zeigen. Auf den Seitenflächen 12 der Scheiben sind im gewählten Beispiel jeweils Formelemente 13 angeordnet. Wie die Fig. 5 zeigt, sind die Formelemente 13 als Erhebungen 13A und Aussparungen 13B ausgeführt. Dabei liegen sich jeweils die Erhebungen 13A und die Aussparungen 13B in radialer Richtung gegenüber. Entlang der Umfangsrichtung ergibt sich eine alternierende Abfolge von Erhebungen 13A und Aussparungen 13B aus. Die sich auf den verschiedenen Seitenflächen derselben Scheibe, also in Richtung der Rotationsachse gegenüber liegenden Formelemente alternieren ebenfalls, sodass jeder Erhebung 13A eine Aussparung 13B gegenüber liegt.

Die Rührwelle 6 ist durch geeignete Mittel rotierend angetrieben und rotiert gemeinsam mit den an ihr befestigten Rührelementen 7 um ihre quer zur Fahrrichtung F verlaufende Längsachse. Die Formelemente 13 bewirken bei ihrem Durchgang durch das bevorratete Saatgut eine das Saatgut auflockernde Rührwirkung.

In alternativer Ausführung ist eine Ausrichtung des Vorratsbehälters 1 und/oder der Rührwelle 6 parallel zur Fahrtrichtung F möglich.

Die Anzahl, Anordnung und/oder Form der Formelemente 13 ist nicht auf die in den Fig. 4 bis 6 dargestellten Ausführungsformen beschränkt. In analoger Weise sind viele Ausführungsformen und Kombinationen aus Erhebungen 13A und Aussparungen 13B denkbar. Dabei hängt die konkrete Ausgestaltung der Rührelemente 7 vom Typ des auszubringenden Materials ab, da sich die Materialien in ihren physikalischen Eigenschaften, insbesondere hinsichtlich ihrer Feinkörnigkeit, Fließfähigkeit und der Anfälligkeit für Verstopfungen und/oder Verklumpungen, unterscheiden.

Sehr feinkörniges Material, wie beispielsweise Feinsämereien, insbesondere Grassamen, neigen stark zur Bildung von Verstopfungen und/oder Verklumpungen. Zur Ausbringung von Feinsämereien wird bei Verwendung der erfindungsgemäßen modular aufgebauten Rührelemente 7 die an der Rührwelle 6 befestigte erste Rührelementkomponente 8 um die zweite Rührelementkomponente 9 ergänzt. Dazu weist die erste Rührelementkomponente 8 eine Aussparung 14 auf, in welche die zweite Rührelementkomponente 9 formschlüssig eingreift, wie es in den Fig. 5 und 6 gezeigt ist. Durch den formschlüssigen Eingriff der zweiten Rührelementkomponente 9 in dafür vorgesehene Aussparungen 14 der ersten Rührelementkomponente 8 wird die Rotation der Rührwelle 6 verlustfrei auf die zweite Rührelementkomponente 9 übertragen.

Die zweite Rührelementkomponente 9 ist flexibel und in bevorzugter Weise drahtförmig ausgebildet, gezeigt in den Fig. 4 bis 6, und weist ein geschlossenes Ende 15 und ein offenes Ende 16 auf. Als Werkstoffe für die zweite Rührelementkomponente 9 eignen sich in besonderem Maße Kunststoff und/oder Metall. Insbesondere können die beiden Werkstoffe in Kombination, beispielsweise als kunststoffummantelter Metalldraht genutzt werden.

Die zweite Rührelementkomponente 9 ist die Rührwelle 6 zumindest teilweise umgreifend und/oder umklammernd ausgebildet. Zur Anbringung und/oder Entfernung der zweiten Rührwelle 6 wird diese unter Ausnutzen ihrer flexiblen Eigenschaften in geeignetem Maße aufgebogen und auf die Rührwelle 6 auf aufgesteckt bzw. abgenommen. In Zusammenwirken mit der flexiblen Ausgestaltung ist die zweite Rührelementkomponente 9 an der Rührwelle mittels Klammer- und/oder Klemmwirkung befestigt. Dabei wirkt die formerhaltende Rückstellkraft der zweiten Rührelementkomponente 9 in Richtung der Rotationsachse der Rührwelle 6 auf die Oberfläche der Rührwelle 6 ein. In bevorzugter Weise umgreift die zweite Rührelementkomponente 9 wenigstens die Hälfte des Umfanges der Rührwelle 6. Ein Verrutschen der zweiten Rührelementkomponente 9 entlang der Umfangsrichtung der Rührwelle 6 wird durch den formschlüssigen Eingriff, insbesondere des geschlossenen Endes 15, der zweiten Rührelementkomponente 9 in die dafür vorgesehene Aussparung 14 der ersten Rührelementkomponente 8 verhindert.

Der sich zwischen dem geschlossenen Ende 15 und dem offenen Ende 16 befindliche, die Rührwelle 6 umgreifende Bereich 17 der zweiten Rührelementkomponente 9 liegt formschlüssig an der Rührwelle 6 an und grenzt zugleich formschlüssig seitlich an die erste Rührelementkomponente 8 an. Somit ist die zweite Rührelementkomponente 9 gegen ein Verrutschen in Längsrichtung der Rührwelle 6 gesichert.

Während des Ausbringens des zu verteilenden Materials ist die Rührwelle 6 rotierend angetrieben und rotiert in Rotationsrichtung R. Das offene Ende 16 der zweiten Rührelementkomponente 9 ist entgegen der Rotationsrichtung orientiert. Dadurch wird eine einziehende Wirkung des Rührelements 7 verhindert. Ein Einziehen von Gliedmaßen, Teilen der Kleidung und/oder Werkzeugen des Bedieners kann dem Bediener erhebliche Verletzungen zuführen bzw. die Rühreinrichtung 5 wesentlich beschädigen.

Durch die Orientierung des offenen Endes 16 entgegen der Rotationsrichtung R kann in Zusammenwirken mit der Flexibilität der zweiten Rührelementkomponente 9 das offene Ende 16 in gewissen Grenzen einem Hindernis ausweichen und sich unschädlich am Hindernis entlangbewegen, ohne eine einziehende Wirkung zu entfalten.

Ist ein derartiges beschriebenes Ausweichen des offenen Endes 16 nicht möglich, bewirkt die fortgesetzte Rotation in Rotationsrichtung R einen Druck des offenen Endes 16 der zweiten Rührelementkomponente 9 gegen das Hindernis. Ein solches Hindernis kann beispielsweise durch Gliedmaßen, Teilen der Kleidung und/oder Werkzeugen des Bedieners gegeben sein. Der steigende Druck gegen das Hindernis bewirkt ein steigendes auf die zweite Rührelementkomponente 9 und insbesondere das offene Ende 16 der zweiten Rührelementkomponente 9 wirkendes Drehmoment. Durch dieses steigende Drehmoment wird die die Rührwelle 6 umgreifende zweite Rührelementkomponente aufgespreizt und/oder aufgebogen. Dieses Aufspreizen und/oder Aufbiegen der zweiten Rührelementkomponente 9 reduziert die Klemmwirkung, welche die Befestigung der zweiten Rührelementkomponente 9 an der Rührwelle 6 gewährleistet. Bei Erreichen und/oder Überschreiten eines Grenzdrehmoments ist die Klemmwirkung derart reduziert, dass sich die zweite Rührelementkomponente 9 von der Rührwelle 6 ablöst.

Das zur Ablösung führende Grenzdrehmoment ist abhängig von der formerhaltenden Rückstellkraft mit der die zweite Rührelementkomponente 9 die befestigende Klemmwirkung an der Rührwelle 6 realisiert. Das Grenzdrehmoment ist somit über die Materialeigenschaften und die Geometrie der zweiten Rührelementkomponente 9 einstellbar und in bevorzugter Weise derart zu wählen, dass eine zufriedenstellende Rührwirkung erzielt wird und dennoch ein zuverlässiges und sicheres Ablösen der zweiten Rührelementkomponente 9 von der Rührwelle 6 sichergestellt ist, um Verletzungen eines Bedieners und/oder Beschädigungen der Rühreinrichtung 5 zu vermeiden.

Eine abgelöste zweite Rührelementkomponente 9 verbleibt im Vorratsbehälter 1 und kann von dem Bediener geborgen werden. Aufgrund ihrer flexiblen Eigenschaften ist die zweite Rührelementkomponente 9 auch nach einem hindernisbedingten Ablösen voll funktionstüchtig und somit wiederverwendbar. Die abgelöste zweite Rührelementkomponente 9 kann in der beschriebenen Weise erneut auf die Rührwelle 6 und/oder die erste Rührelementkomponente 8 aufgesteckt werden.

Analog zum hindernisbedingten Ablösen kann der Bediener der zweiten Rührelementkomponente 9 manuell in einfacher Weise von der Rührwelle 6 und/oder der ersten Rührelementkomponente 8 lösen. Aufgrund der flexiblen Eigenschaften und der Befestigung mittels Klemmwirkung kann die zweite Rührelementkomponente 9 durch den Bediener jederzeit werkzeuglos, komfortabel und schnell angebracht oder entfernt werden.

Die beschriebene Rühreinrichtung 5 lässt sich in einfacher Weise den Erfordernissen, insbesondere an verschiedene Typen auszubringender Materialien, anpassen. Die modular aufgebauten Rührelemente 7 stellen eine besonders wirtschaftliche Möglichkeit dar, eine landwirtschaftliche Verteilmaschine für verschiedene Typen von auszubringendem Material umzurüsten. Die Anbringung und das Entfernen der zweiten Rührelementkomponente 9 ist jederzeit schnell und komfortabel werkzeuglos durchführbar. Zugleich weist die erfindungsgemäße Rühreinrichtung 5 eine sehr hohe Arbeitssicherheit auf. Modular aufgebaute Rührelemente 7 und insbesondere die zweite Rührelementkomponente 9 sind zudem in einfacher Weise bei älteren Verteilmaschinen nachrüstbar.

## Patentansprüche

1. Landwirtschaftliche Verteilmaschine zum Ausbringen von Saatgut und/oder Düngemittel, aufweisend zumindest einen Vorratsbehälter (1) zur Bevorratung des auszubringenden Saatguts und/oder Düngemittels, zumindest einen im unteren Bereich des Vorratsbehälters (1) angeordneten Auslaufbereich (2) mit zumindest einem im Bereich des Auslaufbereichs (2) angeordneten Dosierorgan (3) zur Einspeisung des auszubringenden Materials in zu Ausbringelementen führende Förderleitungen (4), wobei im unteren Bereich des Vorratsbehälters (1) oberhalb des zumindest einen Dosierorgans (3) eine rotierend angetriebene Rühreinrichtung (5) angeordnet ist und die Rühreinrichtung (5) mit einer Rührwelle (6) welche zumindest mit einem Rührelement (7) ausgestattet ist, wobei das zumindest eine Rührelement (7) modular aus zumindest einer ersten (8) und einer zweiten Rührelementkomponente (9) aufgebaut ist **dadurch gekennzeichnet, dass** sich die mit der Rührwelle (6) rotierende zweite Rührelementkomponente (9) bei Erreichen und/oder Überschreiten eines Drehmomentgrenzwerts durch Auftreffen auf ein Hindernis derart verformt, dass sie sich von der Rührwelle (6) und/oder der ersten Rührelementkomponente (8) löst und eine durch Erreichen und/oder Überschreiten eines Drehmomentgrenzwerts von der Rührwelle (6) und/oder der ersten Rührelementkomponente (8) gelöste zweite Rührelementkomponente (9) voll funktionstüchtig und wiederverwendbar ist.

2. Verteilmaschine nach zumindest einem der vorangegangenen Ansprüche, **dadurch gekennzeichnet, dass** die zweite Rührelementkomponente (9) flexibel ausgebildet ist.

3. Verteilmaschine nach zumindest einem der vorangegangenen Ansprüche, **dadurch gekennzeichnet, dass** die zweite Rührelementkomponente (9) die Rührwelle (6) zumindest teilweise umgreifend ausgebildet und die Rührwelle (6) umklammernd an der Rührwelle (6) befestigt ist.

4. Verteilmaschine nach zumindest einem der vorangegangenen Ansprüche, **dadurch gekennzeichnet, dass** die erste Rührelementkomponente (8) Aussparungen (14) aufweist und die zweite Rührelementkomponente (9) durch Eingriff in die Aussparungen (14) der ersten Rührelementkomponente (8) mit der ersten Rührelementkomponente (8) verbunden ist.

5. Verteilmaschine nach zumindest einem der vorangegangenen Ansprüche, **dadurch gekennzeichnet, dass** die zweite Rührelementkomponente (9) durch Formschluss mit der ersten Rührelementkomponente (8) gegen ein Verschieben entlang der Längsachse der Rührwelle (6) gesichert ist.

6. Verteilmaschine nach zumindest einem der vorangegangenen Ansprüche, **dadurch gekennzeichnet, dass** die zweite Rührelementkomponente (9) die Rührwelle (6) in Rotationsrichtung umgreift und ein offenes Ende (16) aufweist, welches in Rotationsrichtung orientiert ist.

7. Verteilmaschine nach zumindest einem der vorangegangenen Ansprüche, **dadurch gekennzeichnet, dass** die zweite Rührelementkomponente (9) derart ausgeformt ist, dass sie bei einer Rotation mit der Rührwelle (6) keine einziehende Wirkung entfaltet.

8. Verteilmaschine nach zumindest einem der vorangegangenen Ansprüche, **dadurch gekennzeichnet, dass** die zweite Rührelementkomponente (9) aus Kunststoff oder Metall besteht.

9. Verteilmaschine nach zumindest einem der vorangegangenen Ansprüche, **dadurch gekennzeichnet, dass** die zweite Rührelementkomponente (9) drahtförmig ausgestaltet ist.

## Claims

1. Agricultural spreader for applying seed and/or fertilizer, having at least one storage container (1) for storing the seed and/or fertilizer to be applied, at least one outlet region (2) arranged in the lower region of the storage container (1) and having at least one metering member (3) arranged in the region of the outlet region (2) for feeding the material to be applied into conveying lines (4) leading to application elements, a stirring device (5) driven in rotation being arranged in the lower region of the storage container (1), above the at least one metering member (3), and the stirring device (5) having a stirrer shaft (6) which is equipped at least with a stirrer element (7), the at least one stirrer element (7) being constructed modularly from at least a first (8) and a second stirrer element component (9), **characterized in that** when a torque limiting value is reached and/or exceeded as a result of striking an obstacle, the second stirrer element component (9) rotating with the stirrer shaft (6) is deformed in such a way that it is detached from the stirrer shaft (6) and/or the first stirrer element component (8), and a second stirrer element component (9) detached from the stirrer shaft (6) and/or the first stirrer element component (8) as a result of reaching and/or exceeding a torque limiting value is fully functional and reusable.

2. Spreader according to at least one of the preceding claims, **characterized in that** the second stirrer element component (9) is flexible.

3. Spreader according to at least one of the preceding claims, **characterized in that** the second stirrer element component (9) engages at least partly around the stirrer shaft (6), and is fixed to the stirrer shaft (6) by clamping around the stirrer shaft (6).

4. Spreader according to at least one of the preceding claims, **characterized in that** the first stirrer element component (8) has cut-outs (14) and the second stirrer element component (9) is connected to the first stirrer element component (8) by engaging in the cut-outs (14) in the first stirrer element component (8).

5. Spreader according to at least one of the preceding claims, **characterized in that** the second stirrer element component (9) is secured against displacement along the longitudinal axis of the stirrer shaft (6) by a form fit with the first stirrer element component (8).

6. Spreader according to at least one of the preceding claims, **characterized in that** the second stirrer element component (9) engages around the stirrer shaft (6) in the direction of rotation, and has an open end (16) which is oriented in the direction of rotation.

7. Spreader according to at least one of the preceding claims, **characterized in that** the second stirrer element component (9) is shaped in such a way that it does not develop a retracting effect during rotation with the stirrer shaft (6).

8. Spreader according to at least one of the preceding claims, **characterized in that** the second stirrer element component (9) consists of plastic or metal.

9. Spreader according to at least one of the preceding claims, **characterized in that** the second stirrer element component (9) is configured in the shape of a wire.

## Revendications

1. Distributeur agricole destiné à l'épandage de semence et/ou d'engrais, ledit distributeur comprenant au moins un réservoir (1) destiné à stocker la semence et/ou l'engrais à épandre, au moins une zone de sortie aménagée (2) disposée dans la région inférieure du réservoir (1) et comportant au moins un élément de dosage (3) disposé dans la région de sortie (2) et destiné à introduire la matière à épandre dans des conduits de transport (4) menant à des éléments d'épandage, un agitateur (5) entraîné en rotation étant disposé dans la région inférieure du réservoir (1) au-dessus d'au moins un élément de dosage (3) et l'agitateur (5) étant équipé d'un arbre d'agitation (6) qui est équipé d'au moins un élément d'agitation (7), l'au moins un élément d'agitation (7) étant conçu de manière modulaire à partir d'au moins un premier (8) et un deuxième composant d'élément d'agitation (9), **caractérisé en ce que**, lorsqu'une valeur limite de couple est atteinte et/ou dépassée, le deuxième composant d'élément d'agitation (9), tournant avec l'arbre d'agitation (6), se déforme par collision avec un obstacle de telle sorte qu'il se détache de l'arbre d'agitation (6) et/ou du premier composant d'élément d'agitation (8) et le deuxième composant d'élément d'agitation (9), détaché de l'arbre d'agitation (6) et/ou du premier composant d'élément d'agitation (8) lorsqu'une valeur limite de couple est atteinte et/ou dépassée, est entièrement fonctionnel et réutilisable.

2. Distributeur selon l'une au moins des revendications précédentes, **caractérisé en ce que** le deuxième composant d'élément d'agitation (9) est flexible.

3. Distributeur selon l'une au moins des revendications précédentes, **caractérisé en ce que** le deuxième composant d'élément d'agitation (9) s'engage au moins partiellement autour de l'arbre d'agitation (6) et l'arbre d'agitation (6) est fixé par pincement à l'arbre d'agitation (6).

4. Distributeur selon l'une au moins des revendications précédentes, **caractérisé en ce que** le premier composant d'élément d'agitation (8) comporte des évidements (14) et le deuxième composant d'élément d'agitation (9) est relié au premier composant d'élément d'agitation (8) par engagement dans les évidements (14) du premier composant d'élément d'agitation (8).

5. Distributeur selon l'une au moins des revendications précédentes, **caractérisé en ce que** le deuxième composant d'élément d'agitation (9) est empêché de coulisser le long de l'axe longitudinal de l'arbre d'agitation (6) par un engagement par complémentarité de formes avec le premier composant d'élément d'agitation (8).

6. Distributeur selon l'une au moins des revendications précédentes, **caractérisé en ce que** le deuxième élément d'agitation (9) s'engage autour de l'arbre d'agitation (6) dans le sens de rotation et comporte une extrémité ouverte (16) qui est orientée dans le sens de la rotation.

7. Distributeur selon l'une au moins des revendications précédentes, **caractérisé en ce que** le deuxième composant d'élément d'agitation (9) est conçu de manière à ne développer aucune action de rétraction lors de la rotation avec l'arbre d'agitation (6).

8. Distributeur selon l'une au moins des revendications précédentes, **caractérisé en ce que** le deuxième composant d'élément d'agitation (9) est en matière synthétique ou en métal.

9. Distributeur selon l'une au moins des revendications précédentes, **caractérisé en ce que** le deuxième composant d'élément d'agitation (9) est conçu sous la forme de fil.
